# DEMANDE DE BREVET EUROPEEN

(11) **EP 4 102 023 A1**
(43) Date de publication de la demande: **14.12.2022**
(21) Numéro de dépôt: 22177536.4
(22) Date de dépôt: 07.06.2022
(51) Int. Cl.: E06B 9/04, A01K 1/00, E06B 1/04, E06B 9/28, E06B 9/264

(54) **BLOC MENUISERIE POUR LA FERMETURE D'UNE OUVERTURE D'UN BATIMENT**

(30) Priorité: 08.06.2021 FR 2106004
(71) Demandeur: Chevillard, Laurent, 72230 Monce en Belin (FR)
(72) Inventeur: Chevillard, Laurent, 72230 Monce en Belin (FR)
(74) Mandataire: Ipsilon

(57) **Abrégé**

Bloc (1) menuiserie comprenant un cadre (2) délimité par deux montants, et deux traverses et, un double vitrage (6). Le bloc menuiserie (1) comprend un premier dispositif (9) d'occultation et un deuxième dispositif (12) positionnables sur le cadre (2), l'un (9), en regard de la face extérieure (8), l'autre (12), en regard de la face intérieure (7) du vitrage (6). Le premier dispositif (9) d'occultation comprend une pluralité de lames (10) orientables et un dispositif d'entraînement en déplacement des lames (10), ce dispositif d'entraînement comprenant une tige (17) de manœuvre à laquelle chaque lame (10) est couplée. Le deuxième dispositif (12) comprend un panneau (13) à fonction de protection du vitrage (6) monté de manière amovible sur le cadre (2).

## Description

La présente invention concerne un bloc menuiserie pour la fermeture d'une ouverture d'un bâtiment, tel qu'un bâtiment d'élevage d'animaux ainsi qu'un bâtiment, en particulier un bâtiment d'élevage d'animaux, comprenant au moins une ouverture et un tel bloc menuiserie pour la fermeture de ladite ouverture.

Elle concerne en particulier, un bloc menuiserie pour la fermeture d'une ouverture d'un bâtiment, tel qu'un bâtiment d'élevage d'animaux, ledit bloc menuiserie comprenant un cadre délimité par deux montants, une traverse inférieure et une traverse supérieure, un vitrage de remplissage du cadre entouré par ledit cadre, ce vitrage présentant une face intérieure destinée à être tournée vers l'intérieur du bâtiment et une face extérieure opposée.

Dans de nombreux bâtiments d'élevage, il est constaté que les animaux, en particulier lorsque l'élevage est un élevage de volailles, échangent des coups de bec et s'arrachent les plumes entre eux.

Un but de l'invention est de proposer un bloc menuiserie dont la conception permet de diminuer ces phénomènes de picage observés.

Un but de l'invention est de proposer un bloc menuiserie dont la conception permet une mise en œuvre aisée en un temps court.

A cet effet, l'invention a pour objet, un bloc menuiserie pour la fermeture d'une ouverture d'un bâtiment, tel qu'un bâtiment d'élevage d'animaux, ledit bloc menuiserie comprenant un cadre délimité par deux montants, une traverse inférieure et une traverse supérieure, un vitrage de remplissage du cadre entouré par ledit cadre, ce vitrage présentant une face intérieure destinée à être tournée vers l'intérieur du bâtiment et une face extérieure opposée, caractérisé en ce que le vitrage est un double vitrage, en ce que le bloc menuiserie comprend un premier dispositif d'occultation monté sur le cadre en regard de la face extérieure du vitrage et un deuxième dispositif positionnable sur le cadre en regard de la face intérieure du vitrage, en ce que le premier dispositif d'occultation comprend une pluralité de lames orientables s'étendant entre les montants du cadre et un dispositif d'entraînement en déplacement des lames comprenant au moins une tige de manœuvre à laquelle chaque lame est couplée, en ce que le dispositif d'entraînement en déplacement des lames est un dispositif d'entraînement en déplacement à pivotement des lames montées mobiles, autour d'axes respectifs parallèles entre eux et à la direction longitudinale des lames, entre une position fermée dans laquelle les lames sont coplanaires pour former un plan de fermeture et au moins une position ouverte dans laquelle les lames sont inclinées en direction du vitrage en formant, à l'état dressé du cadre, une pente ascendante en direction dudit vitrage, et en ce que le deuxième dispositif comprend un panneau à fonction de protection du vitrage monté de manière amovible sur le cadre. La présence d'un premier dispositif d'occultation à lames orientables permet de maitriser l'orientation du flux de lumière naturelle à l'intérieur du bâtiment et d'empêcher un éclairage des animaux par lumière directe, ce qui permet de réduire les phénomènes de picage observés. La disposition de ce premier dispositif d'occultation côté face extérieure du vitrage permet de limiter les risques d'endommagement et facilite la maintenance. La réalisation du bloc menuiserie sous forme d'un ensemble prêt à monter permet un gain de temps et la garantie d'une bonne tenue dans le temps dudit ensemble. Enfin, la présence d'un second dispositif de type panneau amovible disposé côté face intérieure du vitrage permet, entre deux périodes d'élevage, d'utiliser à l'intérieur du bâtiment des engins qui peuvent projeter des débris en direction du bloc menuiserie sans risque d'endommagement du vitrage tout en autorisant également un lavage aisé dudit bloc menuiserie. La pré-installation de ce deuxième dispositif sur le cadre permet un montage et un démontage ultérieurs aisés. Le cadre forme le dormant du vitrage, du panneau constitutif du deuxième dispositif de protection du vitrage et du premier dispositif d'occultation. La présence d'un seul et même cadre entraîne une simplification du bloc menuiserie. Le deuxième dispositif est, de préférence, un dispositif d'occultation.

Par « double vitrage », on entend ici que le vitrage est formé par deux plaques de verre parallèles. Le cadre du bloc menuiserie forme le châssis de ce vitrage.

Selon un mode de réalisation de l'invention, le cadre comprend deux rainures parallèles disposées en regard l'une de l'autre et ménagées l'une, dans la traverse supérieure, l'autre, dans la traverse inférieure du cadre, lesdites rainures étant ouvertes à au moins l'une de leurs extrémités pour un montage du panneau du deuxième dispositif sur le cadre par simple coulissement à l'intérieur desdites rainures du cadre. Cette conception permet un montage et un démontage aisés du deuxième dispositif sans nuire à l'utilisation du premier dispositif d'occultation et à la facilité de maintenance du bloc menuiserie. Cette disposition permet également de ne pas enlever totalement le panneau en position ouverte pour éviter son endommagement ou sa perte à la manière d'un volet latéral coulissant. Enfin, cette disposition permet de coupler aisément des panneaux de plusieurs blocs menuiseries entre eux pour une commande simultanée des deuxièmes dispositifs entre eux.

Selon un mode de réalisation de l'invention, le cadre comprend des plots disposés en regard de la face intérieure du vitrage, lesdits plots étant portés l'un ou les uns par la traverse supérieure du cadre, l'autre ou les autres par la traverse inférieure du cadre, les plots ménageant avec la face intérieure du vitrage un espace à l'intérieur duquel le panneau du deuxième dispositif est apte à prendre place. Cette conception permet d'éviter la présence de motifs en creux sans nuire au maintien du panneau du deuxième dispositif.

Selon un mode de réalisation de l'invention, le panneau du deuxième dispositif est un panneau en matière de synthèse. Il en résulte un lavage aisé dudit panneau. Ce panneau peut être un panneau opaque, translucide ou transparent. Le deuxième dispositif peut ainsi être un dispositif d'occultation.

Selon un mode de réalisation de l'invention, la matière de synthèse du panneau du deuxième dispositif est chargée en éléments de renfort, tels que des fibres. Cette conception permet une augmentation de la résistance mécanique dudit panneau.

Selon un mode de réalisation de l'invention, le panneau du deuxième dispositif est un panneau souple. Cette réalisation du deuxième dispositif permet si nécessaire un démontage aisé dudit panneau par simple déformation du panneau. Ceci est encore plus simple en présence de plots.

Selon un mode de réalisation de l'invention, le dispositif d'entraînement en déplacement des lames comprend un organe rotatif cylindrique auquel la ou chaque tige de manœuvre du dispositif d'entraînement est couplable pour permettre, en parallèle de l'entraînement en rotation dudit organe rotatif, un déplacement de la tige de manœuvre et le passage des lames d'une position à une autre. Cette disposition permet de manière simple une commande qui peut être motorisée du premier dispositif d'occultation. Cette disposition permet également de coupler plusieurs blocs menuiseries entre eux pour une commande simultanée des premiers dispositifs d'occultation de plusieurs blocs menuiseries.

Selon un mode de réalisation de l'invention, l'organe rotatif est disposé à l'extérieur du cadre et monté sur la traverse supérieure du cadre en s'étendant parallèlement à ladite traverse supérieure.

Selon un mode de réalisation de l'invention, le dispositif d'entraînement en déplacement des lames comprend au moins un organe de rappel de la ou d'au moins l'une des tiges de manœuvre dans une position correspondant à la position fermée des lames.

Selon un mode de réalisation de l'invention, l'épaisseur des montants du cadre prise suivant une direction orthogonale au vitrage est inférieure à l'épaisseur des traverses inférieure et supérieure.

L'invention a encore pour objet un bâtiment, en particulier un bâtiment d'élevage d'animaux, comprenant au moins une ouverture et un bloc menuiserie pour la fermeture de ladite ouverture, caractérisé en ce que le bloc menuiserie est conforme à celui décrit ci-dessus.

### Brève description des dessins

L'invention sera bien comprise à la lecture de la description suivante d'exemples de réalisation, en référence aux dessins annexés dans lesquels :
[Fig. 1] représente une vue en coupe d'un bloc menuiserie conforme à l'invention en position ouverte des lames du premier dispositif d'occultation et à l'état monté du deuxième dispositif ;
[Fig. 2] représente une vue en coupe d'un bloc menuiserie conforme à l'invention en position fermée des lames du premier dispositif d'occultation et à l'état démonté du deuxième dispositif ;

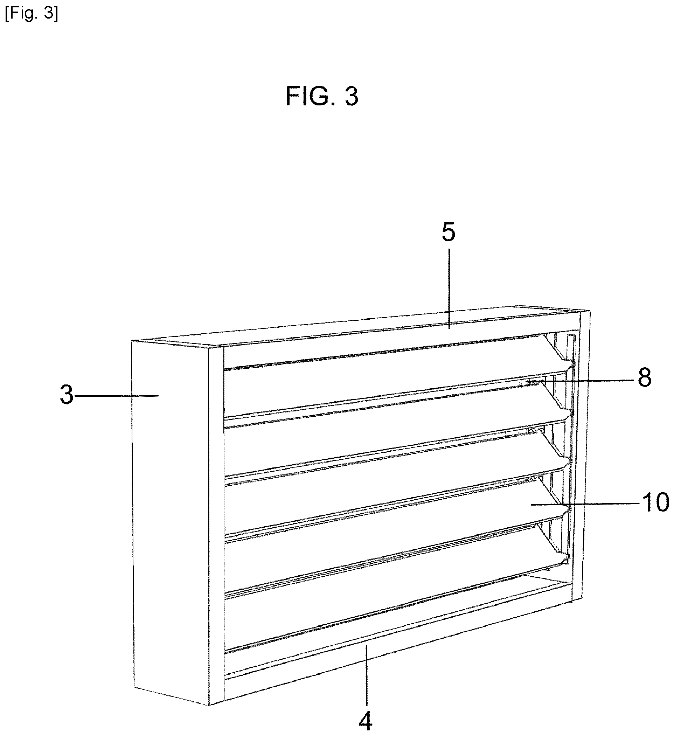

[Fig. 3] représente une vue en perspective d'un bloc menuiserie conforme à l'invention en position ouverte des lames du premier dispositif d'occultation ;
[Fig. 4] représente une vue schématique d'un bâtiment équipé d'au moins un bloc menuiserie conforme à l'invention ;
[Fig. 5] représente une vue en coupe d'un bloc menuiserie conforme à l'invention en position fermée des lames du premier dispositif d'occultation et à l'état démonté du deuxième dispositif.

Comme mentionné ci-dessus, le bloc menuiserie 1 objet de l'invention est destiné à s'insérer dans une ouverture 21 d'un bâtiment 20, en particulier d'un bâtiment 20 d'élevage d'animaux tels que des volailles, pour permettre la fermeture de cette ouverture 21.

Ce bloc menuiserie 1 se présente sous forme d'un ensemble prêt à monter.

Ce bloc menuiserie 1 comprend un cadre 2 destiné, en configuration d'utilisation, à s'étendre à l'état dressé dans un plan vertical.

Ce cadre 2 est délimité par deux montants 3, une traverse inférieure 4 et une traverse supérieure 5.

Le bloc menuiserie 1 comprend encore un vitrage 6 de remplissage du cadre 2 entouré par le cadre 2. Ce vitrage 6 présente une face intérieure 7 destinée à être tournée vers l'intérieur du bâtiment 20 et une face extérieure 8 opposée à l'état monté du bloc menuiserie 1 dans l'ouverture 21 devant être équipée d'un tel bloc menuiserie 1.

Le vitrage 6 est un double vitrage formé de deux vitres parallèles séparées par une lame d'air.

Le bloc menuiserie 1 comprend encore un premier dispositif 9 d'occultation monté sur le cadre 2 en regard de la face extérieure 8 du vitrage 6 et un deuxième dispositif 12 positionnable sur le cadre 2 en regard de la face intérieure 7 du vitrage 6.

Le premier dispositif 9 d'occultation est un dispositif d'occultation à lames. Ce premier dispositif 9 d'occultation comprend donc une pluralité de lames 10 parallèles, orientables, s'étendant entre les montants 3 du cadre 2 et un dispositif 11 d'entraînement en déplacement des lames 10 comprenant au moins une tige 17 de manœuvre à laquelle chaque lame 10 est couplée. Ces lames 10 pivotent autour d'axes parallèles à l'axe longitudinal des lames et sensiblement orthogonalement à l'axe longitudinal des montants 3 du cadre 2.

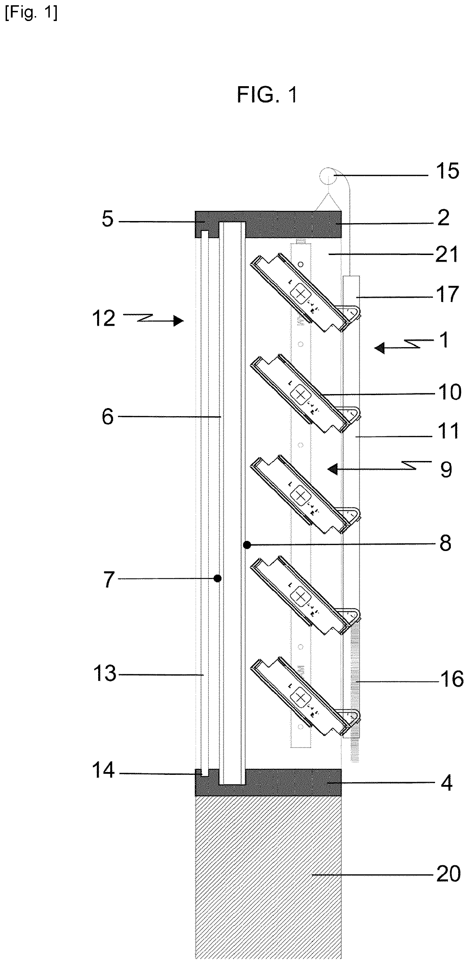

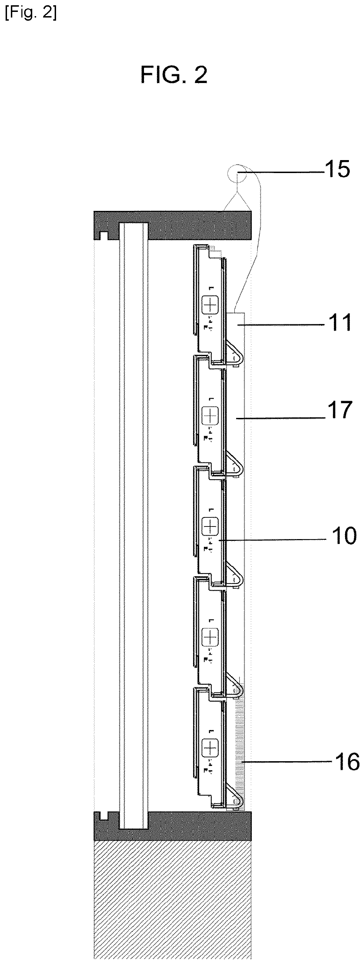

Les lames 10 sont ainsi montées mobiles à pivotement autour d'axes respectifs parallèles entre eux et à la direction longitudinale des lames 10 entre une position fermée dans laquelle les lames 10 sont coplanaires pour former un plan de fermeture tel que représenté à la figure 2, et au moins une position ouverte dans laquelle les lames 10 sont inclinées en direction du vitrage 6 en formant, à l'état dressé du cadre 2, une pente ascendante en direction du vitrage 6 comme illustré à la figure 1.

Ainsi, le flux de lumière entrant est orienté en direction du plafond du bâtiment 20 et aucune lumière directe ne parvient sur les animaux disposés au niveau du plancher du bâtiment 20.

Les lames sont disposées sensiblement selon un même plan dans leur position de fermeture pour réaliser la continuité du panneau. Elles sont orientées transversalement audit plan dans la position d'ouverture, en laissant entre elles des intervalles, comme l'illustre la figure 1.

Chaque lame est ici formée de deux faces principales s'étendant sensiblement dans des plans parallèles. Lesdites faces principales sont reliées entre elles par deux bords longitudinaux et par deux bords d'extrémité.

Chaque bord longitudinal est épaulé. L'épaulement de l'un des bords longitudinaux est de forme complémentaire de l'épaulement de l'autre bord longitudinal. Ainsi, en position de fermeture, chaque lame peut, par l'un quelconque de ses bords longitudinaux, venir à recouvrement par emboîtement avec le bord longitudinal d'une lame adjacente.

Le dispositif 11 d'entraînement en déplacement des lames 10 comprend un organe 15 rotatif cylindrique auquel la ou chaque tige 17 de manœuvre du dispositif 11 d'entraînement est couplable pour permettre, en parallèle de l'entraînement en rotation dudit organe 15 rotatif, un déplacement de la tige 17 de manœuvre et le passage des lames 10 d'une position à une autre.

Dans les exemples représentés, l'organe 15 rotatif est disposé à l'extérieur du cadre 2 et monté sur la traverse supérieure 5 du cadre 2, en s'étendant parallèlement à ladite traverse supérieure 5.

Le dispositif 11 d'entraînement en déplacement des lames 10 comprend au moins un organe de rappel 16, tel qu'un ressort, de la ou des tiges 17 de manœuvre dans une position correspondant à la position fermée des lames 10.

Ainsi, l'entraînement en rotation de l'organe 15 rotatif entraîne un déplacement de la ou des tiges 17 de manœuvre dans le sens d'une élévation de la ou des tiges 17 de manœuvre, ce qui entraîne en parallèle un déplacement à pivotement des lames 10 dans le sens d'une inclinaison de la partie des lames s'étendant au-dessus de leur axe de pivotement, en direction du vitrage, pour se rapprocher du vitrage 6, à l'état dressé du cadre 2, tandis que la partie des lames s'étendant au-dessous de leur axe de pivotement se déplace dans le sens d'un écartement du vitrage 6.

Bien évidemment, une inversion du sens de rotation de l'organe 15 rotatif entraîne un retour des lames 10 en position de fermeture.

Cet organe 15 rotatif est un corps cylindrique qui peut se présenter sous forme d'un tube ou d'un tambour autour duquel s'enroule un lien de liaison de la tige 17 de manœuvre à l'organe 15 rotatif à la manière d'un câble de treuil.

Cet organe 15 rotatif peut être commun à plusieurs tiges 17 de manœuvre d'un même bloc menuiserie, mais également commun à des tiges 17 de manœuvre de blocs menuiserie différents.

Cet organe 15 rotatif peut être entraîné manuellement en rotation à l'aide, par exemple, d'une manivelle ou automatiquement, à l'aide d'un moteur.

Dans une version simplifiée, la ou les tiges 17 de manœuvre d'un même premier dispositif 9 d'occultation peuvent être munies d'une patte de manœuvre actionnable manuellement.

Chaque tige 17 de manœuvre se déplace au cours de sa manœuvre, sensiblement parallèlement à elle-même et à l'axe longitudinal d'un montant 3 du cadre 2.

Le bloc menuiserie 1 comprend encore un deuxième dispositif 12 à fonction de protection du vitrage 6 positionnable sur le cadre, en regard de la face intérieure 7 du vitrage 6. Ce deuxième dispositif 12 de protection du vitrage 6 peut être un dispositif d'occultation.

Ce deuxième dispositif 12 comprend un panneau 13 monté de manière amovible, c'est-à-dire démontable sur le cadre 2. À cet effet, le cadre 2 peut comprendre deux rainures 14 parallèles disposées en regard l'une de l'autre et ménagées l'une dans la traverse supérieure 5, l'autre dans la traverse inférieure 4 du cadre 2.

Ces rainures 14 sont ouvertes à au moins l'une de leurs extrémités pour un montage du panneau 13 du deuxième dispositif 12 sur le cadre 2, par simple coulissement à l'intérieur desdites rainures 14 du cadre 2. Ainsi, le panneau 13 peut passer d'une position fermée à une position ouverte et inversement, par simple coulissement suivant une direction parallèle au plan du vitrage. En position ouverte, il peut rester solidarisé au cadre 2 ou être déplacé au-delà des extrémités libres des rainures pour être démonté.

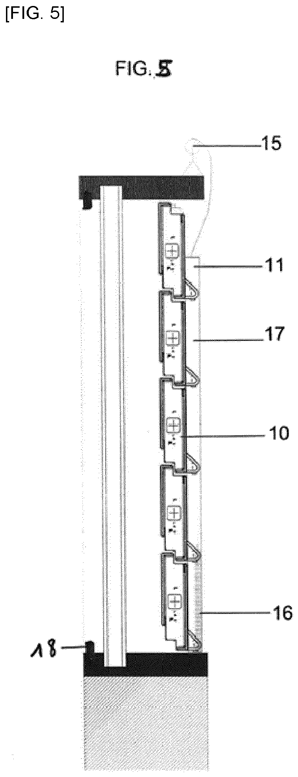

En variante, le cadre 2 peut comprendre des plots 18 comme illustré à la figure 5. Ces plots 18 sont disposés en regard de la face intérieure 7 du vitrage 6, lesdits plots 18 étant portés l'un ou les uns par la traverse supérieure 5 du cadre 2, l'autre ou les autres par la traverse inférieure 4 du cadre 2, les plots 18 ménageant avec la face intérieure 7 du vitrage un espace à l'intérieur duquel le panneau du deuxième dispositif est apte à prendre place. Ainsi, le panneau 13, qui peut être un panneau souple, peut passer d'une position fermée à une position ouverte par simple déformation ou par déplacement à coulissement entre les plots et la face intérieure du vitrage suivant une direction parallèle au plan du vitrage.

Généralement, et quelle que soit la forme de réalisation du bloc menuiserie, l'épaisseur des montants 3 du cadre 2 prise suivant une direction orthogonale au vitrage 6 peut être inférieure à l'épaisseur des traverses inférieure 4 et supérieure 5.

Ce deuxième dispositif 12 fait office de dispositif de protection du vitrage 6 lorsque cela est nécessaire. Un dispositif d'entraînement peut permettre la solidarisation en déplacement à coulissement de panneaux de plusieurs blocs menuiseries.

Le panneau 13 du deuxième dispositif 12 est un panneau en matière de synthèse. La matière de synthèse du panneau 13 du deuxième dispositif 12 peut être chargée en éléments de renfort, tels que des fibres. Le panneau 13 du deuxième dispositif 12 peut être un panneau souple ou rigide. Idéalement, ce panneau est un panneau souple pour faciliter son enlèvement par simple déformation. Ce panneau 13 du deuxième dispositif 12 dit d'occultation est idéalement un panneau opaque ou translucide. En variante, le panneau peut être transparent.

Ainsi, à l'aide d'un même ensemble aisé à monter dans l'ouverture d'un bâtiment, il est possible d'empêcher ou de limiter un picage des animaux entre eux sans nuire à une utilisation optimale du bâtiment.

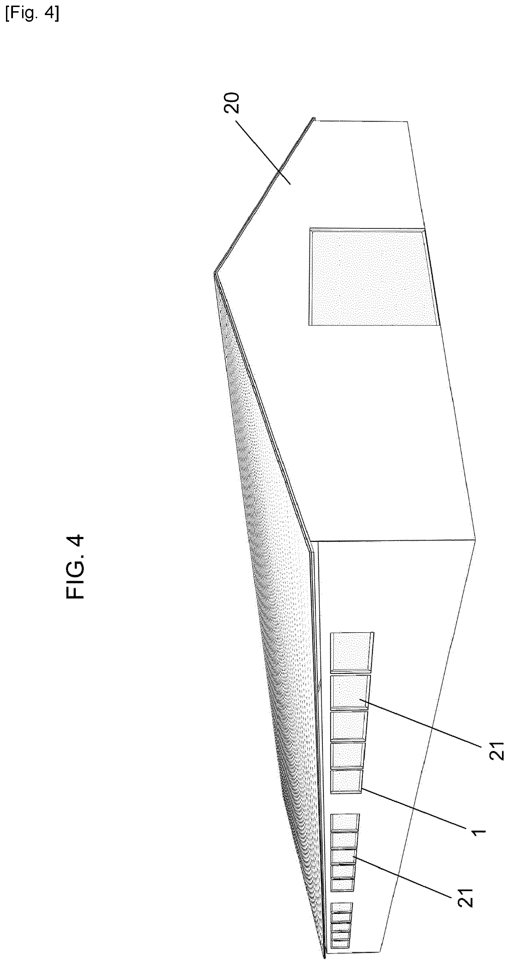

L'invention concerne également le bâtiment qui en résulte, tel que représenté à la figure 4, ce bâtiment 20 pouvant disposer d'un ou plusieurs blocs menuiserie 1 tels que décrits ci-dessus.

## Revendications

1. Bloc (1) menuiserie pour la fermeture d'une ouverture (21) d'un bâtiment (20), tel qu'un bâtiment d'élevage d'animaux, ledit bloc menuiserie (1) comprenant un cadre (2) délimité par deux montants (3), une traverse inférieure (4) et une traverse supérieure (5), un vitrage (6) de remplissage du cadre (2) entouré par ledit cadre (2), ce vitrage (6) présentant une face intérieure (7) destinée à être tournée vers l'intérieur du bâtiment (20) et une face extérieure (8) opposée, **caractérisé en ce que** le vitrage (6) est un double vitrage, **en ce que** le bloc menuiserie (1) comprend un premier dispositif (9) d'occultation monté sur le cadre (2) en regard de la face extérieure (8) du vitrage (6) et un deuxième dispositif (12) positionnable sur le cadre (2) en regard de la face intérieure (7) du vitrage (6), **en ce que** le premier dispositif (9) d'occultation comprend une pluralité de lames (10) orientables s'étendant entre les montants (3) du cadre (2) et un dispositif (11) d'entraînement en déplacement des lames (10) comprenant au moins une tige (17) de manœuvre à laquelle chaque lame (10) est couplée, **en ce que** le dispositif (11) d'entraînement en déplacement des lames (10) est un dispositif d'entraînement en déplacement à pivotement des lames (10) montées mobiles, autour d'axes respectifs parallèles entre eux et à la direction longitudinale des lames (10), entre une position fermée dans laquelle les lames (10) sont coplanaires pour former un plan de fermeture et au moins une position ouverte dans laquelle les lames (10) sont inclinées en direction du vitrage (6) en formant, à l'état dressé du cadre (2), une pente ascendante en direction dudit vitrage (6), et **en ce que** le deuxième dispositif (12) comprend un panneau (13) à fonction de protection du vitrage (6) monté de manière amovible sur le cadre (2).

2. Bloc menuiserie (1) pour la fermeture d'une ouverture (21) d'un bâtiment (20), selon la revendication 1, **caractérisé en ce que** le cadre (2) comprend deux rainures (14) parallèles disposées en regard l'une de l'autre et ménagées l'une, dans la traverse supérieure (5), l'autre, dans la traverse inférieure (4) du cadre (2), lesdites rainures (14) étant ouvertes à au moins l'une de leurs extrémités pour un montage du panneau (13) du deuxième dispositif (12) sur le cadre (2) par simple coulissement à l'intérieur desdites rainures (14) du cadre (2).

3. Bloc menuiserie (1) pour la fermeture d'une ouverture (21) d'un bâtiment (20), selon la revendication 1, **caractérisé en ce que** le cadre (2) comprend des plots (18) disposés en regard de la face intérieure (7) du vitrage (6), lesdits plots (18) étant portés l'un ou les uns par la traverse supérieure (5) du cadre (2), l'autre ou les autres par la traverse inférieure (4) du cadre (2), les plots (18) ménageant avec la face intérieure (7) du vitrage un espace à l'intérieur duquel le panneau du deuxième dispositif est apte à prendre place.

4. Bloc menuiserie (1) pour la fermeture d'une ouverture (21) d'un bâtiment (20), selon l'une des revendications 1 à 3, **caractérisé en ce que** le panneau (13) du deuxième dispositif (12) est un panneau en matière de synthèse.

5. Bloc menuiserie (1) pour la fermeture d'une ouverture (21) d'un bâtiment (20) selon la revendication 4, **caractérisé en ce que** la matière de synthèse du panneau (13) du deuxième dispositif (12) est chargée en éléments de renfort, tels que des fibres.

6. Bloc menuiserie (1) pour la fermeture d'une ouverture (21) d'un bâtiment (20), selon l'une des revendications 1 à 5, **caractérisé en ce que** le panneau (13) du deuxième dispositif (12) est un panneau souple.

7. Bloc menuiserie (1) pour la fermeture d'une ouverture (21) d'un bâtiment (20) selon l'une des revendications 1 à 6, **caractérisé en ce que** le dispositif (11) d'entraînement en déplacement des lames comprend un organe (15) rotatif cylindrique auquel la ou chaque tige (17) de manœuvre du dispositif (11) d'entraînement est couplable pour permettre, en parallèle de l'entraînement en rotation dudit organe (15) rotatif, un déplacement de la tige (17) de manœuvre et le passage des lames (10) d'une position à une autre.

8. Bloc menuiserie (1) pour la fermeture d'une ouverture (21) d'un bâtiment (20) selon la revendication 7, **caractérisé en ce que** l'organe (15) rotatif est disposé à l'extérieur du cadre et monté sur la traverse supérieure (5) du cadre (2) en s'étendant parallèlement à ladite traverse supérieure (5).

9. Bloc menuiserie (1) pour la fermeture d'une ouverture (21) d'un bâtiment (20) selon l'une des revendications 7 ou 8, **caractérisé en ce que** le dispositif (11) d'entraînement en déplacement des lames (10) comprend au moins un organe de rappel (16) de la ou d'au moins l'une des tiges (17) de manœuvre dans une position correspondant à la position fermée des lames (10).

10. Bloc menuiserie (1) pour la fermeture d'une ouverture (21) d'un bâtiment (20), selon l'une des revendications 1 à 9, **caractérisé en ce que** l'épaisseur des montants (3) du cadre (2) prise suivant une direction orthogonale au vitrage (6) est inférieure à l'épaisseur des traverses inférieure (4) et supérieure (5).

11. Bâtiment (20), en particulier bâtiment d'élevage d'animaux, comprenant au moins une ouverture (21) et un bloc menuiserie (1) pour la fermeture de ladite ouverture (21), **caractérisé en ce que** le bloc menuiserie (1) est conforme à l'une des revendications 1 à 9.
